# EUROPÄISCHE PATENTSCHRIFT

(11) **EP 1 225 209 B1**
(45) Veröffentlichungstag und Bekanntmachung des Hinweises auf die Patenterteilung: **08.09.2010**
(21) Anmeldenummer: 01130036.5
(22) Anmeldetag: 18.12.2001
(51) Int. Cl.: C09J 11/06, C08K 5/521, C09J 7/02

(54) **Verwendung von Phosphatgruppen enthaltenden Polymerdispersionen als Klebstoff**
Use of polymer dispersions containing an emulsifier with phosphate groups as adhesive
Utilisation de dispersions polymères contenant un émulsifiant avec des groupes phosphate comme adhésifs

(30) Priorität: 23.01.2001 DE 10102961
(43) Veröffentlichungstag der Anmeldung: 24.07.2002
(73) Patentinhaber: BASF SE, 67056 Ludwigshafen (DE)
(72) Erfinder: Staller, Christelle, Dr., 67470 Seltz (FR); Schumacher, Karl-Heinz, Dr., 67433 Neustadt (DE); Schlarb, Bernhard, Dr., 67067 Ludwigshafen (DE); Centner, Alexander, Dr., 67127 Rödersheim-Gronau (DE); Hartz, Oliver, 68309 Mannheim (DE)

(56) Entgegenhaltungen:
- EP-A- 0 287 306
- WO-A-99/46337
- US-A- 4 645 711
- US-A- 5 116 676

## Beschreibung

Die Erfindung betrifft die Verwendung einer wäßrigen Polymerdispersion als Klebstoff für selbstklebende wiederabziehbare Folien, Bänder oder Etiketten, **dadurch gekennzeichnet, daß** die Polymerdispersion 0,1 bis 10 Gewichtsteile, bezogen auf 100 Gew. Teile Polymer, eines Emulgators A) mit einer Phosphatgruppe enthält, und dass der Emulgator sowohl Ethylenoxid- als auch Propylenoxidgruppen enthält.

Für viele Anwendungen sind selbstklebende Etiketten, Folien und Bänder gewünscht, die später von Substrat wieder abgezogen werden können.

Die selbstklebenden Artikel sollen einerseits eine gute Haftung zum Substrat haben, andererseits sollen nach Abziehen der Etiketten, Bänder oder Folien keine Rückstände auf dem Substrat verbleiben . Zur Erreichung einer rückstandsfreien Wiederabziehbarkeit werden bisher oft Vernetzer enthaltende Polymerdispersionen verwendet. Das erfordert jedoch einen zusätzlichen Mischvorgang.

Aus der nicht veröffentlichten DE 100109837 (O.Z. 0050/51222) sind Copolymerisate mit Ureidogruppen bekannt, welche sich für wiederabziehbare Etiketten und Folien eignen.

In WO99/46337 werden wäßrige Polymerdispersionen mit einem Phosphat-gruppen enthaltenden Emulgator beschrieben.

Aufgabe der vorliegenden Erfindung waren rückstandsfrei wiederabziehbare Folien, Bänder und Etiketten. Die Schutzfolien, Bänder und Etiketten sollten jedoch trotzdem eine gute Haftung zu den Substraten haben. Die Klebstoffschicht sollte weiterhin gut auf den selbstklebenden Artikeln haften, sowie transparent, alterungs- und lichtbeständig sein.

Demgemäß wurde die eingangs definierte Verwendung gefunden.

Das in der wäßrigen Dispersion dispergierte Polymer besteht vorzugsweise zu mindestens 40 Gew.-%, besonders bevorzugt zu mindestens 60 Gew.-%, ganz besonders bevorzugt zu mindestens 80 Gew.-% aus sogenannten Hauptmonomeren.

Die Hauptmonomeren sind ausgewählt aus C₁-C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und 1 oder 2 Doppelbindungen oder Mischungen dieser Monomeren.

Zu nennen sind z. B. (Meth)acrylsäurealkylester mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z. B. Vinyllaurat, -stearat, Vinylpropionat, Versaticsäurevinylester und Vinylacetat.

Als vinylaromatische Verbindungen kommen Vinyltoluol, a- und p-Methylstyrol, a-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z. B. Vinylmethylether oder Vinylisobutylether. Bevorzugt wird Vinylether von 1 bis 4 C-Atome enthaltenden Alkoholen.

Als Kohlenwasserstoffe mit 2 bis 8 C-Atomen und zwei olefinischen Doppelbindungen seien Butadien, Isopren und Chloropren genannt, mit einer Doppelbindung z.B. Ethylen oder Propylen.

Als Hauptmonomere bevorzugt sind die C₁- bis C₁₀-Alkylacrylate und -methacrylate, insbesondere C₁- bis C₈-Alkylacrylate und -methacrylate und Vinylaromaten, insbesondere Styrol und deren Mischungen.

Ganz besonders bevorzugt sind Methylacrylat, Methylmethacrylat, Ethylacrylat, n-Butylacrylat, n-Hexylacrylat, Octylacrylat und 2-Etyhlhexylacrylat, Styrol sowie Mischungen dieser Monomere.

Neben den Hauptmonomeren kann das radikalisch polymerisierte Polymer weitere Monomere enthalten, z.B. Monomere mit Carbonsäure, Sulfonsäure oder Phosphonsäuregruppen. Bevorzugt sind Carbonsäuregruppen. Genannt seien z. B. Acrylsäure, Methacrylsäure, Itaconsäure, Maleinsäure oder Fumarsäure.

Weitere Monomere sind z.B. auch Hydroxylgruppen enthaltende Monomere, insbesondere C₁-C₁₀-Hydroxyalkyl(meth)acrylate, (Meth)acrylamid.

Als weitere Monomere seien darüberhinaus Phenyloxyethylglykolmono-(meth-)acrylat, Glycidylacrylat, Glycidylmethacrylat, Amino-(meth-)acrylate wie 2-Aminoethyl- (meth-)acrylat genannt.

Als weitere Monomere seien auch vernetzende Monomere genannt; ein Gehalt von vernetzenden Monomeren oder sonstigen Vernetzern ist im Rahmen der vorliegenden Erfindung jedoch keinesfalls erforderlich.

Die Herstellung der Polymere erfolgt in einer bevorzugten Ausführungsform durch Emulsionspolymerisation, es handelt sich daher um ein Emulsionspolymerisat.

Die Glasübergangstemperatur des Polymeren, bzw. des Emulsionspolymerisats beträgt vorzugsweise -60 bis +20°C, besonders bevorzugt -50 bis 0°C und ganz besonders bevorzugt -50 bis -10°C.

Die Glasübergangstemperatur läßt sich nach üblichen Methoden wie Differentialthermoanalyse oder Differential Scanning Calorimetrie (s. z. B. ASTM 3418/82, sog. "midpoint temperature") bestimmen.

Die wäßrige Polymerdispersion enthält 0, 1 bis 10 Gew. -Teile, bevorzugt 0,1 bis 5 Gew.-Teile, besonders bevorzugt 0,2 bis 3 Gew.-Teile eines Emulgators A) mit mindestens einer Phosphatgruppe.

Der Emulgator besteht weiterhin vorzugsweise zu mindestens 50 Gew.-% aus Alkylenoxidgruppen, insbesondere Ethylenoxidgruppen, Propylenoxidgruppen oder deren Mischungen.

Bei dem Emulgator handelt es sich bevorzugt um eine Verbindung, die zu mindestens 70 Gew.-% aus Ethylenoxid- und/oder Propylenoxidgruppen besteht.

Der Emulgator enthält sowohl Ethylenoxidgruppen als auch Propylenoxidgruppen.

Der Anteil der Ethylenoxidgruppen beträgt mindestens 10 Gew.-%, vorzugsweise mindestens 40 Gew.-%, bezogen auf das Molgewichts des Emulgators.

Der Anteil der Propylenoxidgruppen beträgt mindestens 10 Gew.-%, vorzugsweise mindestens 20 Gew.-%, bezogen auf das Molgewichts des Emulgators.

Das Molgewicht des Emulgators beträgt vorzugsweise 400 bis 2000 besonders bevorzugt 600 bis 1600 g/mol.

Vorzugsweise handelt es sich um einen Emulgator der Formel 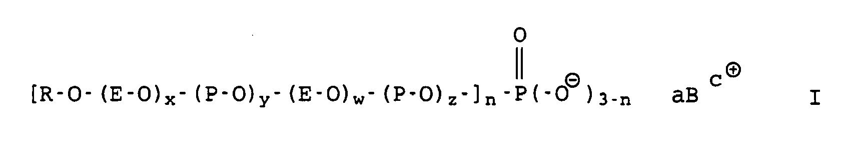 Worin die Variablen folgende Bedeutung haben:
- E:: CH₂-CH₂
- P:: 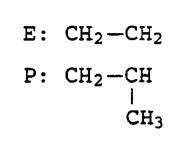
- R:: C₁₋C₁₈-Alkyl
- x,y,w,z:: jeweils ganze Zahl von 0 bis 30,
- x+w:: mindestens 1
- y+Z:: mindestens 1
- n:: 1 oder 2
- B:: einwertiges oder zweiwertiges Kation
- a,c:: jeweils 1 oder 2 mit a*c=3-n

Vorzugsweise steht R für C₁₀-C₁₆ Alkyl. Vorzugsweise beträgt die Summe x+w 6 bis 20, besonders bevorzugt 10 bis 14. Vorzugsweise beträgt die Summe y+z 2 bis 10, besonders bevorzugt 3 bis 7. Vorzugsweise ist sowohl w als auch z gleich 0.

Vorzugsweise ist B ein einwertiges Kation, insbesondere von Na, K, NH₃ oder H, entsprechend ist c=1 und a=1 oder 2.

Verbindungen dieser Art sind z.B. unter dem Handelsnamen Lutensit® (BASF) erhältlich.

Vorzugsweise wird der Emulgator bereits bei der Emulsionspolymerisation der Monomeren verwendet. Die Monomeren werden dabei in wäßriger Phase mit Hilfe des Emulgators dispergiert und anschließend polymerisiert.

Neben Emulgator A) können dabei weitere Emulgatoren oder sonstige grenzflächenaktive Verbindungen verwendet werden.

Die Mitverwendung weiterer Emulgatoren oder grenzflächenaktiver Verbindungen ist jedoch keinesfalls erforderlich.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewicht im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z. B. ethoxylierte Fettalkohole (EO-Grad: 3 bis 50, Alkylrest: C₈bis C₃₆), ethoxylierte Mono-, Di- und Tri-Alkylphenole (EO-Grad: 3 bis 50, Alkylrest: C₄- bis C₉), Alkalimetallsalze von Dialkylestern der Sulfobernsteinsäure sowie Alkali- und Ammoniumsalze von Alkylsulfaten (Alkylrest: C₈- bis C₁₂), von ethoxylierten Alkanolen (EO-Grad: 4 bis 30, Alkylrest: C₁₂- bis C₁₈), von ethoxylierten Alkylphenolen (EO-Grad: 3 bis 50, Alkylrest: C₄- bis C₉), von Alkylsulfonsäuren (Alkylrest: C₁₂- bis C₁₈) und von Alkylarylsulfonsäuren (Alkylrest: C₉- bis C₁₈).

Weitere geeignete Emulgatoren sind Verbindungen der allgemeinen Formel II 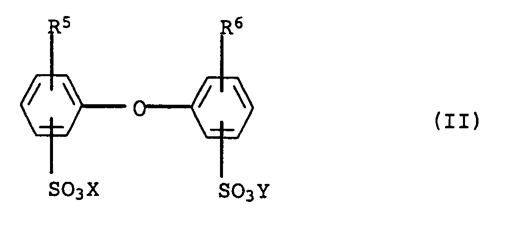 worin R⁵ und R⁶ Wasserstoff oder C₄- bis C₁₄-Alkyl bedeuten und nicht gleichzeitig Wasserstoff sind, und X und Y Alkalimetallionen und/oder Ammoniumionen sein können. Vorzugsweise bedeuten R⁵, R⁶ lineare oder verzweigte Alkylreste mit 6 bis 18 C-Atomen oder Wasserstoff und insbesondere mit 6, 12 und 16 C-Atomen, wobei R⁵ und R⁶ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen II in denen X und Y Natrium, R⁵ ein verzweigter Alkylrest mit 12 C-Atomen und R⁶ Wasserstoff oder R⁵ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company).

Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Handelsnamen von Emulgatoren sind z. B. Dowfax®2 A1, Emulan® NP 50, Dextrol® OC 50, Emulgator 825, Emulgator 825 S, Emulan® OG, Texapon® NSO, Nekanil® 904 S, Lumiten® I-RA, Lumiten E 3065, Disponil FES 77, Lutensol AT 18, Steinapol VSL, Emulphor NPS 25.

Die grenzflächenaktive Substanz wird üblicherweise in Mengen von 0,1 bis 10 Gew.-%, bezogen auf die zu polymerisierenden Monomeren verwendet.

Wasserlösliche Initiatoren für die Emulsionspolymerisation sind z.B. Ammonium- und Alkalimetallsalze der Peroxidischwefelsäure, z.B. Natriumperoxodisulfat, Wasserstoffperoxid oder organische Peroxide, z.B. tert-Butylhydroperoxid.

Geeignet sind auch sogenannte Reduktions-Oxidations(Red-Ox)-Initiator Systeme.

Die Red-Ox-Initiator-Systeme bestehen aus mindestens einem meist anorganischen Reduktionsmittel und einem anorganischen oder organischen-Oxidationsmittel.

Bei der Oxidationskomponente handelt es sich z.B. um die bereits vorstehend genannten Initiatoren für die Emulsionspolymerisation.

Bei der Reduktionskomponenten handelt es sich z.B. um Alkalimetallsalze der schwefligen Säure, wie z.B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind z.B. Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die genannten Verbindungen werden meist in Form wäßriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung.

Die Menge der Initiatoren beträgt im allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Bei der Polymerisation können Regler eingesetzt werden, z.B. in Mengen von 0 bis 0,8 Gew.-Teile, bezogen auf 100 Gew.-Teile der zu polymerisierenden Monomeren, durch die die Molmasse verringert wird. Geeignet sind z.B. Verbindungen mit einer Thiolgruppe wie tert.-Butylmercaptan, Thioglycolsäureethylacrylester, Mercaptoethynol, Mercaptopropyltrimethoxysilan oder tert.-Dodecylmercaptan.

Die Emulsionspolymerisation erfolgt in der Regel bei 30 bis 130, vorzugsweise 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozeß als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in-emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z.B. zur besseren Einstellung der Teilchengröße eine Polymersaat vorgelegt werden.

Die Art und Weise, in der der Initiator im Verlauf der radikalischen wäßrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wäßrigen Emulsionspolymerisation kontinuierlich oder stufenweise eingesetzt werden. Im einzelnen hängt dies von der chemischen Natur des Initiatorsystems als auch von der Polymersiationstemperatur ab. Vorzugsweise wird ein Teil vorgelegt und der Rest nach Maßgabe des Verbrauchs der Polymerisationszone zugeführt.

Zur Entfernung der Restmonomeren wird üblicherweise auch nach dem Ende der eigentlichen Emulsionspolymerisation, d.h. nach einem Umsatz der Monomeren von mindestens 95 %, Initiator zugesetzt.

Die einzelnen Komponenten können dem Reaktor beim Zulaufverfahren von oben, in der Seite oder von unten durch den Reaktorboden zugegeben werden.

Bei der Emulsionspolymerisation werden wäßrige Dispersionen des Polymeren in der Regel mit Feststoffgehalten von 15 bis 75 Gew.-%, bevorzugt von 40 bis 75 Gew.-% erhalten.

Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bioder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach den für eine niedrige Viskosität angestrebten Teilchengrößenverteilung.

Das so hergestellte Polymer wird vorzugsweise in Form seiner wäßrigen Dispersion verwendet.

Die Polymerdispersion wird als Klebstoff für wiederabziehbare Folien, Bänder oder Etiketten verwendet.

Der Klebstoff kann allein aus der wäßrigen Dispersion des Polymeren bestehen.

Der Klebstoff kann noch weitere Zusatzstoffe, z.B. Netzmittel, Verdicker, Stabilisatoren, Sichtschutzmittel, Biozide enthalten.

Bei der erfindungsgemäßen Folie handelt es sich bevorzugt um eine mit dem Klebstoff einseitig beschichtete thermoplastische Folie. In Betracht kommen geeignete Polymerfolien, wie Folien aus Polyolefinen, z.B. Polyethylen, Polypropylen, Polyolefincopolymeren, Folien aus Polyestern oder Polyacetat.

Bei der Folie kann es sich auch um einen Folienverbund aus unterschiedlichen Polymerfolien handeln.

Gegebenenfalls kann auch auf die Oberfläche der Folie ein Haftvermittler aufgebracht werden, um die Haftung der Klebstoffschicht zu verbessern.

Bei den Bändern kann es sich um einseitig oder beidseitig beschichtete Bänder aus den obigen Substanzen handeln.

Bei den erfindungsgemäßen Etiketten kann es sich um Etiketten aus Papier oder vorzugsweise einer thermoplastischen Folie handeln. Als thermoplastische Folie kommen die oben aufgeführten Polymerfolien in Betracht. Die Etiketten sind einseitig mit Klebstoff beschichtet.

Der Klebstoff kann nach üblichen Methoden wie Rakeln, Streichen auf die Folien, Bänder oder Etiketten aufgetragen werden.

Die Auftragsmenge beträgt bevorzugt 0,1 bis 20 g, besonders bevorzugt 2 bis 15 g Copolymerisat pro m².

Nach dem Auftragen folgt im allgemeinen ein Trocknungsschritt zur Entfernung des Wassers.

Die Haftung der Klebstoffschicht auf den Folien, Bändern oder Etiketten ist sehr gut.

Die Folie eignet sich als Schutz, insbesondere während des Transports und der Lagerung von Gegenständen (Schutzfolie).

Bei den zu schützenden Gegenständen kann es sich z. B. um solche aus Metall, Holz, Glas oder Kunststoff handeln.

Genannt seien z.B. Kraftfahrzeugkarosserien oder Karosserieteile, lackierte Oberflächen, transparente Oberflächen.

Die Etiketten eignen sich insbesondere z.B. für Verpackungsoberflächen, Bücher etc.

Die Folien, Bänder und Etiketten können von den Gegenständen von Hand wieder abgezogen werden, ohne daß ein Klebstoffrückstand auf dem Gegenstand verbleibt. Die Haftung auf den Gegenständen ist gut, trotzdem lassen sich die Folien, Bänder und Etiketten leicht abziehen. Die gute Wiederabziehbarkeit ist auch noch nach langer Zeit gegeben.

Insbesondere eignen sich die erfindungsgemäßen Folien, Bänder und Etiketten auch für Substrate aus Stahl. Der Phosphorenthaltende Emulgator trägt gleichzeitig zum Korrosionsschutz bei.

### Beispiele

### I. Herstellung von Polymerdispersionen

### 1. Herstellung der Dispersion mit Emulgator A:

| | Vorlage (g) | Monomer-Emulsion (g) | Initiator (g) | Nachkatalyse (g) |
|---|---|---|---|---|
| Wasser | 260 | 202 | | |
| Feinsaat (33 %ige in Wasser) | 3,25 | | | |
| | | | | |
| Emulgator A Lösung | | 35,75 | | |
| 2-EHA | | 214,5 | | |
| nBA | | 450,45 | | |
| MMA | | 21,45 | | |
| M-Amol | | 95,33 | | |
| AS | | 14,30 | | |
| NaPS 7 %ige Lösung in Wasser | | | 51,07 | |
| t-BHP 10%ige Lösung in Wasser | | | | 21,4 |
| Aceton | | | | 1,36 |
| Natriumdisulfit | | | | 2,15 |
| Lumiten® IDS 3525 | | | | 6,16 |

| | | | | |
|---|---|---|---|---|
| Emulgator A Lösung: 20 gew. -%ige Lösung eines ethoxylierten und propoxylierten Phosphats der Formel I, erhältlich als Lutensit® A-EP von BASF. Lumiten® IDS 3525: 58 gew.-%ige wässrige Lösung des Natriumsalzes eines Sulfobernsteinsäureesters in Wasser/Isotridecanol-Ethoxylat. MMA: Methylmethacrylat 2-EHA: 2-Ethylhexylacrylat nBA: n-Butylacrylat M-Amol: N-Methylolacrylamid AS: Acrylsäure NaPS: Natriumperoxidsulfat t-BHP: tert.-Butylhydroperoxid | | | | |

### Fahrweise:

Die Vorlage wurde in einem 2-Liter-Kolben mit Rückflußkühler, Stickstoffeinleitung und Metallrührer gefüllt. Unter Stickstoffspülung wurde auf 90°C gebracht. 20 % der Initiatorlösung wurden in 2 Minuten zugegeben. Nach 5 Minuten wurde die Monomer-Emulsion innerhalb von 2,5 Stunden zugegeben. Gleichzeitig wurde die restliche Initiator-Lösung innerhalb von 2,75 Stunden zugegeben. Dann wurde auf 80°C gekühlt und zur Absenkung des Restmonomergehaltes, die Nachkatalysator-Lösung zugegeben. Ein pH von 7 wurde dann mit Ammoniakwasser eingestellt. 0,5 % von Lumiten IDS 3252 wurden zum Schluß in die Dispersion abgemischt. Lumiten IDS 3525 wird zur Verbesserung des Netzvermögens von der Dispersion verwendet.

### 2. Dispersion mit Disponil FES 77 (zum Vergleich)

Die Durchführung entspricht Beispiel 1; 1 % Emulgator A wurde jedoch durch 1 % Disponil® FES 77 (30 gew.-%ige Lösungs des Natriumsalzes eines Schwefelsäurehalbestersgemisches von C₁₀-C₁₆-Ethoxylaten (mittlerer EO-Grad 30) in Wasser) der Firma Gognis ersetzt.

### II. Herstellung der Schutzfolien und anwendungstechnischen Prüfung:

Die Dispersion wurde auf eine Polyethylenfolie (mit Korona vorbehandelt) mit 5 bis 6 g/m² aufgerakelt und bei 90°C drei Minuten getrocknet.

### Prüfung auf rückstandfreies Abziehen:

Dieser Test besteht in der Bewertung des Aussehens der zu schützenden Oberfläche nach dem Abziehen der Schutzfolie. Die mit der Folie beklebte Oberfläche wird eine und vier Wochen bei 50°C und 80 % relativer Luftfeuchtigkeit gelagert. Dann werden die Folien von Hand einmal langsam und einmal rasch abgezogen und der Rückstand auf der Oberfläche per Augenschein beurteilt. Im optimalen Falle ist die Oberfläche frei von Rückständen des Klebstoffes.

Bewertet wird nach folgender Skala:
1. Substratoberfläche unverändert
2. Abdruck der Folie als Schatten erkennbar
3. Etwas Klebstoffrückstand auf Oberfläche
4. Klebstoffschicht teilweise auf Oberfläche übertragen
5. Klebstoffschicht ganz auf Oberfläche übertragen
6. Kohäsionsbruch

Das Abziehen wird nach folgender Skala beurteilt:
A: kaum Haftung
B: leicht abziehbar
C: schwer abziehbar

Geprüft wurde auf Stahl, Polycarbonat und Plexiglas.

| Dispersion | Abzug | Plexiglas | | Polycarbonat | | Stahl | |
|---|---|---|---|---|---|---|---|
| | | 1 Woche | 4 Wochen | 1 Woche | 4 Wochen | 1 Woche | 4 Wochen |
| Dispersion mit 1 % Emulgat or A | langsam | C1 | C1 | C1 | C1 | B1 | C2 |
| | rasch | C1 | C1 | C1 | C1 | B1 | C2 |
| Dispersion mit 1 % Disponil FES 77 | langsam | C1 | C1 | C1 | C1 | C2 | C2 |
| | rasch | C1 | C1 | C1 | C1 | C6 | C2 |
| | | | | | | | |
| Acronal ® A 213 S | langsam | C1 | C1 | C1 | C1 | C6 | C6 |
| | rasch | C1 | C1 | C1 | C1 | C6 | C6 |
| | | | | | | | |
| | | | | | | | |
| | | | | | | | |

Acronal® A 213 S ist ein handelsüblicher Klebrohstoff auf Dispersionsbasis, der von BASF für die Anwendung Schutzfolien verkauft ist.

Die Dispersion mit 1 % Emulgator A ist leichter auf Stahl als Acronal A 213 S und die Dispersion mit 1 % Disponil FES nach einer Woche abzuziehen.

### Quickstick, Schälfestigkeit, Test auf PE-Folie:

Die Dispersionen wurden auf 25 mm breite stücke PE-Folie mit 20 g/m² aufgerakelt und 3 Minuten bei 90°C getrocknet.

Die so erhaltenen Schutzfolien wurden auf eine Stahlplatte geklebt und Quickstick und Schälfestigkeit bei 23°C und 50 % relativer Luftfeuchtigkeit geprüft.

Die Schälfestigkeit wurde nach 24 h Lagerung in einer Zugprüfmaschine mit einer Abzugsgeschwindigkeit von 300 mm/min bestimmt.

### Quickstick

Zur Bestimmung des Quickstick-Wertes wurde aus einem 17,5 cm langen und 2,5 cm breiten Prüfstreifen durch Einspannen beider Enden in die Klemmbacken einer Zugmaschine eine Schlaufe gebildet, die dann mit einer chromierten Stahloberlfäche mit einer Geschwindigkeit von 30 cm/min (Herabsenken der Schlaufe auf das chromierte Stahlblech) in Kontakt gebracht wird. Nach vollflächigem Kontakt wird die Schlaufe sofort wieder abgezogen und die dabei ermittelte Maximalkraft in N72,5 cm als Maß für den Quickstick-Wert (Schlingenwert, Tack) bestimmt.

| Dispersion | Quickstick | Schälfestigkeit in N/25 mm | |
|---|---|---|---|
| | | sofort | 24 Stunden |
| Dispersion mit 1 % Emulgator A | 2,7 | 2,4 | 2,7 |
| Dispersion mit 1 % Disponil FES 77 | 3,8 | 1,8 | 4,7 |
| | | | |
| Acronal® A 213 S | 2,1 | 1,9 | 3,8 |

Bei der Dispersion mit Emulgator A) ist eine gleichbleibend gute Schälfestigkeit zu erkennen. Eine Anstieg über die Zeit auf unerwünscht hohe Werte findet nicht statt.

## Patentansprüche

1. Verwendung einer wäßrigen Polymerdispersion als Klebstoff für selbstklebende wiederabziehbare Folien, Bänder oder Etiketten, **dadurch gekennzeichnet, dass** die Polymerdispersion 0,1 bis 10 Gewichtsteile, bezogen auf 100 Gew. Teile Polymer, eines Emulgators A) mit einer Phosphatgruppe enthält, und dass der Emulgator sowohl Ethylenoxydgruppen als auch Propylenoxidgruppen enthält.

2. Verwendung gemäß Anspruch 1, **dadurch gekennzeichnet, dass** der Emulgator zu mindestens 50 Gew.- % aus Alkoxygruppen besteht.

3. Verwendung gemäß einem der Ansprüche 1 bis 2, **dadurch gekennzeichnet, dass** der Emulgator ein Molgewicht von 400 bis 2000 g/mol hat.

4. Verwendung gemäß einem der Ansprüche 1 bis 3, **dadurch gekennzeichnet, dass** das in der Polymerdispersion dispergierte Polymer zu mindestens 40 Gew.-% aus sogenannten Hauptmonomeren, ausgewählt aus C1 bis C20 Alkyl(meth)acrylaten, Vinylestern von bis zu 20 C-Atome enthaltenden Carbonsäuren, Vinylaromaten mit bis zu 20 C-atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren aufgebaut ist.

5. Wiederabziehbare, selbstklebende Folien, Bänder oder Etiketten, erhältlich durch Verwendung gemäß einem der Ansprüche 1 bis 4.

6. Mit wiederabziehbaren Folien, Bänder oder Etiketten gemäß Anspruch 5 versehene Substrate.

## Revendications

1. Utilisation d'une dispersion aqueuse de polymère en tant qu'adhésif pour films, rubans ou étiquettes autocollants redétachables, **caractérisée en ce que** la dispersion de polymère contient de 0,1 à 10 parties en poids, par rapport à 100 parties en poids de polymère, d'un émulsifiant A) comportant un groupe phosphate, et **en ce que** l'émulsifiant contient aussi bien des groupes oxyde d'éthylène que des groupes oxyde de propylène.

2. Utilisation selon la revendication 1, **caractérisée en ce que** l'émulsifiant est constitué à raison de 50 % en poids de groupes alcoxy.

3. Utilisation selon la revendication 1 ou 2, **caractérisée en ce que** l'émulsifiant a une masse moléculaire de 400 à 2000 g/mole.

4. Utilisation selon l'une quelconque des revendications 1 à 3, **caractérisée en ce que** le polymère dispersé dans la dispersion de polymère est constitué à raison d'au moins 40 % en poids de monomères dits principaux, choisis parmi des (méth)acrylates d'alkyle en C₁-C₂₀, des esters vinyliques d'acides carboxyliques contenant jusqu'à 20 atomes de carbone, des composés vinylaromatiques ayant jusqu'à 20 atomes de carbone, des nitriles à insaturation éthylénique, des halogénures de vinyle, des éthers vinyliques d'alcools contenant de 1 à 10 atomes de carbone, des hydrocarbures aliphatiques ayant de 2 à 8 atomes de carbone et comportant une ou deux doubles liaisons ou des mélanges de ces monomères.

5. Films, rubans ou étiquettes autocollants redétachables, pouvant être obtenus par utilisation selon l'une quelconque des revendications 1 à 4.

6. Substrats munis de films, rubans ou étiquettes redétachables selon la revendication 5.

## Claims

1. The use of an aqueous polymer dispersion as adhesive for a self-adhesive peelable film, tape or label, wherein the polymer dispersion contains from 0.1 to 10 parts by weight of an emulsifier A) containing a phosphate group, based on 100 parts by weight of polymer, and wherein the emulsifier comprises both ethylene oxide groups and propylene oxide groups.

2. The use according to claim 1, wherein the emulsifier comprises alkoxy groups to an extent of at least 50 wt %.

3. The use according to either of claims 1 and 2, wherein the emulsifier has a molar weight of from 400 to 2000 g/mol.

4. The use according to any of claims 1 to 3, wherein the polymer dispersed in the polymer dispersion is constructed of at least 40 wt % of so-called main monomers selected from C₁ to C₂₀ alkyl (meth)acrylates, vinyl esters or carboxylic acids containing up to 20 C atoms, vinylaromatics having up to 20 C atoms, ethylenically unsaturated nitriles, vinyl halides, vinyl ethers of alcohols containing from 1 to 10 C atoms, aliphatic hydrocarbons containing from 2 to 8 C atoms and one or two double bonds, or mixtures of these monomers.

5. A peelable, self-adhesive film, tape or label obtainable through use according to any of claims 1 to 4.

6. A substrate provided with a peelable film, tape or label according to claim 5.
